**Europäisches Patentamt**

**European Patent Office**

**Office européen des brevets**

(19)

(11) Veröffentlichungsnummer : **0 042 163**
**B1**

(12) **EUROPÄISCHE PATENTSCHRIFT**

(45) Veröffentlichungstag der Patentschrift :
01.10.86

(21) Anmeldenummer : 81104561.6

(22) Anmeldetag : 12.06.81

(51) Int. Cl.⁴ : **F 02 D 23/02**, F 02 D 41/04,
F 02 D 43/00, F 02 D 41/22

(54) Verfahren zur Steuerung der Kraftstoffzumessung und des Zündzeitpunkts einer Brennkraftmaschine.

(30) Priorität : 14.06.80 DE 3022427

(43) Veröffentlichungstag der Anmeldung :
23.12.81 Patentblatt 81/51

(45) Bekanntmachung des Hinweises auf die Patenterteilung : 01.10.86 Patentblatt 86/40

(84) Benannte Vertragsstaaten :
DE FR SE

(56) Entgegenhaltungen :
DE-A- 2 417 187
FR-A- 2 397 539
FR-A- 2 433 104
GB-A-   482 596
US-A- 3 202 143
US-A- 4 178 891
INGENIEUR DE L'AUTOMOBILE, Nr. 3, April 1980,
Seiten 71-73, Paris, Fr., "Le nouveau turbo de Saab:
Auto-adaptation aux différents indices d'octane"
MTZ 41 (1980), Seiten 203-212

(73) Patentinhaber : ROBERT BOSCH GMBH
Postfach 50
D-7000 Stuttgart 1 (DE)

(72) Erfinder : Denz, Helmut, Dipl.-Ing.
Rosenbergplatz 2
D-7000 Stuttgart 1 (DE)
Erfinder : Stumm, Hans-Peter
Lindenstrasse 4
D-7251 Hemmingen (DE)
Erfinder : Zechnall, Martin, Dr.
Holdergasse 26
D-7141 Schwieberdingen (DE)

(74) Vertreter : Vetter, Hans, Dr.-Ing.
Robert-Bosch-Platz 1
D-7016 Gerlingen-Schillerhöhe (DE)

## Beschreibung

### Stand der Technik

Die Erfindung geht aus von einem Verfahren nach der Gattung des unabhängigen Patentanspruchs. Bei Brennkraftmaschinen, insbesondere bei Turbomotoren, nimmt die Klopfneigung mit steigender Motortemperatur besonders stark zu. Beim Turbomotor ist dies bedingt durch den Füllungsgrad nach dem Turboprinzip. Um das Klopfen zu verhindern, ist es z. B. aus der DE-A-2 801 512 oder der DE-A-2 659 239 bekannt, den Zündzeitpunkt nach spät zu verlegen. Diese Maßnahme führt jedoch bei vielen Brennkraftmaschinen, insbesondere bei Turbomotoren zu einer starken Überhitzung des Auspuffs beziehungsweise des Turboladers und ist wegen der daraus resultierenden Leistungseinbuße nicht in jedem Fall wünschenswert. Auch die bei Turbomotoren ebenfalls mögliche Maßnahme, den Ladedruck zu verringern, führt zu einer unerwünschten Leistungseinbuße.

Aus der Motortechnischen Zeitschrift 41 (1980), 5, S. 203-212 ist ein elektronisches System zur Steuerung von Otto-Motoren bekannt, bei der die Kraftstoffzumessung und die Erzeugung von Zündsignalen elektronisch erfolgt. Bei Vollast wird auch hier das Gemisch angefettet, wodurch sich die Klopfgrenze zu früheren Zeitpunkten verschiebt. Bei der bekannten Vorrichtung wird aus diesem Grunde die Zündverstellung für diesen Betriebsfall ebenfalls nach früh genommen. Aus der US-A-3 202 143 ist es weiterhin bekannt, eine Sicherheitsvorrichtung für Brennkraftmaschinen vorzusehen, die bei unnormalen Druck- oder Temperaturverhältnissen ein automatisches Abschalten der Treibstoffzufuhr bewirkt. Weitere Maßnahmen sind jedoch dieser Entgegenhaltung nicht zu entnehmen.

### Vorteile der Erfindung

Das erfindungsgemäße Verfahren mit den kennzeichnenden Merkmalen des unabhängigen Patentanspruchs hat demgegenüber den Vorteil, daß ein Klopfen der Brennkraftmaschine auch bei hohen Motortemperaturen ohne nennenswerte Leistungseinbuße wirksam verhindert wird. Die aus der Anfettung resultierende Verbrauchserhöhung tritt nur bei tatsächlich vorhandener Klopfgefahr auf und ist nicht dauernd wirksam, so daß die mittlere Verbrauchserhöhung kaum meßbar ist. Ein weiterer Vorteil besteht darin, daß bei kennfeldgesteuerten Motoren das Kennfeld zur Steuerung der Kraftstoffeinspritzung und des Zündzeitpunkts zunächst verbrauchsoptimal ohne Berücksichtigung der Klopfneigung ausgelegt werden kann. Die Methode der Anfettung zur Verhinderung des Klopfens kann dann als Zusatzeinrichtung, bzw. bei einer programmgesteuerten Vorrichtung als Zusatzprogramm eingefügt werden. Neben der Verhinderung des Klopfens wird gleichzeitig zuverlässig eine Überhitzung, bzw. ein Kochen des Motors verhindert.

Besonders vorteilhaft ist es, durch Abschalten der Kraftstoffzufuhr oberhalb einer maximalen Grenztemperatur Motorschäden durch Überhitzung zu vermeiden.

Es ist besonders vorteilhaft, in Abhängigkeit der ansteigenden Temperatur eine Zündzeitpunktverstellung in Richtung « spät » vorzunehmen. Diese Spätverstellung ist jedoch bei gleichzeitiger Anfettung in wesentlich geringerem Maße notwendig. Beide Maßnahmen können somit optimal für den Motor ausgelegt werden.

Besonders vorteilhaft ist auch die temperaturabhängige Steuerung der Anfettung und der Zündzeitpunktverstellung über in einer Speichereinrichtung abgelegte Kennfelder. Der die Anfettung, bzw. die Zündzeitpunktverstellung bewirkende Punkt auf dem Kennfeld wird dabei durch an verschiedenen Stellen gemessene Temperaturen und vorzugsweise auch durch die Drehzahl und die Last angewählt.

Durch die in den abhängigen Patentansprüchen aufgeführten Maßnahmen sind vorteilhafte Weiterbildungen und Verbesserungen des im unabhängigen Patentanspruch angegebenen Verfahrens möglich.

### Zeichnung

Ein Ausführungsbeispiel der Erfindung ist in der Zeichnung dargestellt und in der nachfolgenden Beschreibung näher Erläutert. Es zeigen Fig. 1 eine schaltungsmäßige Ausgestaltung des Ausführungsbeispiels, Fig. 2 ein Diagramm zur Erläuterung des Anfettungsfaktors oberhalb eines festgelegten Arbeitspunkts, die Fig. 3 und 4 Kennfelder zur Erzeugung eines additiven Zündverstellwinkels und die Fig. 5 und 6 Kennfelder zur Erzeugung eines Anfettungsfaktors.

### Beschreibung des Ausführungsbeispiels

Eine elektronische Motorsteuerung 10, die in Abhängigkeit von anliegenden Motorparametern P den Schließwinkel für die Zünndung und den Zündzeitpunkt $\alpha$ sowie die Grundeinspritzzeit ti berechnet, weist einen ersten Steuerausgang 11 für die Zündung und einen zweiten Steuerausgang 12 für die Einspritzung auf. Solche Motorsteuerungen, welche Zündung und Einspritzung vorzugsweise über in Festwertspeichern abgelegten Kennfeldern berechnen, sind z. B. aus der DE-A-2 850 534 bekannt. Weiterhin sind derzeit bereits Kraftfahrzeuge mit derartigen Motorsteuerungen in Serienfertigung.

Der Ausgang 11 ist über eine Addierstufe 13 mit einer Zündungsendstufe 14 verbunden, durch die im dargestellten Ausführungsbeispiel vier Zündkerzen 15 bis 18 gesteuert werden. Der Steuerausgang 12 ist über eine Multiplizierstufe 19 und eine nachgeschaltete Schaltstufe 20 mit einer Kraftstoffeinspritz-Endstufe 21 verbunden, durch die im dargestellten Ausführungsbeispiel vier Einspritzventile 22 bis 25 gesteuert werden. Es kann natürlich eine beliebig andere Zahl von Einspritzventilen, bzw. Zündkerzen gesteuert werden.

Einer Aufbereitungsschaltung 26 sind fünf, den Temperaturen T1 bis T5 entsprechende Spannungswerte sowie der Drehzahl n und der Last entsprechende Spannungswerte zugeführt. Dabei ist z. B. T1 die Motortemperatur, T2 die Abgastemperatur, T3 die Ansauglufttemperatur, T4 die Ladelufttemperatur und T5 die Turboladertemperatur. Die beiden Temperaturen T4 und T5 können natürlich nur bei einem Turbomotor gemessen werden. In einer einfacheren Version kann auch eine geringere Zahl von Temparaturen bestimmt und zu einem Temperaturwert T ausgewertet werden, im einfachsten Fall eine einzige Temperatur z. B. die Motortemperatur T1. Als Lastsignal L wird vorteilhaft das Signal ti für die Grundeinspritzzeit verwendet. Der Drehzahleinfluß und der Lasteinfluß kann bei einer einfacheren Version ebenfalls weggelassen werden. In der Aufbereitungsschaltung 26 werden die anliegenden Spannungswerte auf die erforderlichen Spannungspegel gebracht, gegebenenfalls entstört und in digitale Zahlenwerte umgewandelt, die als Adressen für das im nachgeschalteten Festwertspeicher (ROM) 27 gespeicherte Kennfeld dienen. Die Speicherwerte werden in einem nachgeschalteten Digital-Analog-Wandler 28 in analoge Werte umgewandelt, wobei die Kennfeldwerte $\alpha 1$ für die Zündung einen zweiten Eingang der Addierstufe 13 und die Kennfeldwerte F für die Einspritzung einem zweiten Eingang der Multiplizierstufe 19 zugeführt werden. Eine Kennfeldsteuerung an sich ist aus dem zur Motorsteuerung 10 angegebenen Stand der Technik bekannt.

Ein der Motortemperatur T1 entsprechender Spannungswert als Temperaturwert T ist einer Schwellwertstufe 29 zugeführt, deren Ausgang mit dem Steuereingang der Schaltstufe 20 verbunden ist.

Einer weiteren Schwellwertstufe 30 ist als lastabhängiges Signal L die Grundeinspritzzeit ti sowie ein drehzahlabhängiges Signal n zugeführt. Über Ausgänge dieser Schwellwertstufe 30 werden die Addierstufe 13 und die Multiplizierstufe 19 in der Weise gesteuert, daß bei Auftreten eines Ausgangssignals der Schwellwertstufe 30 die an den Eingängen A der beiden Stufen 13, 19 anliegenden Werte nicht mehr beachtet werden. Dies bedeutet im Falle der Addierstufe 13, daß $\alpha 1$ auf Null und im Falle der Multiplizierstufe 19, daß F auf 1 gesetzt wird.

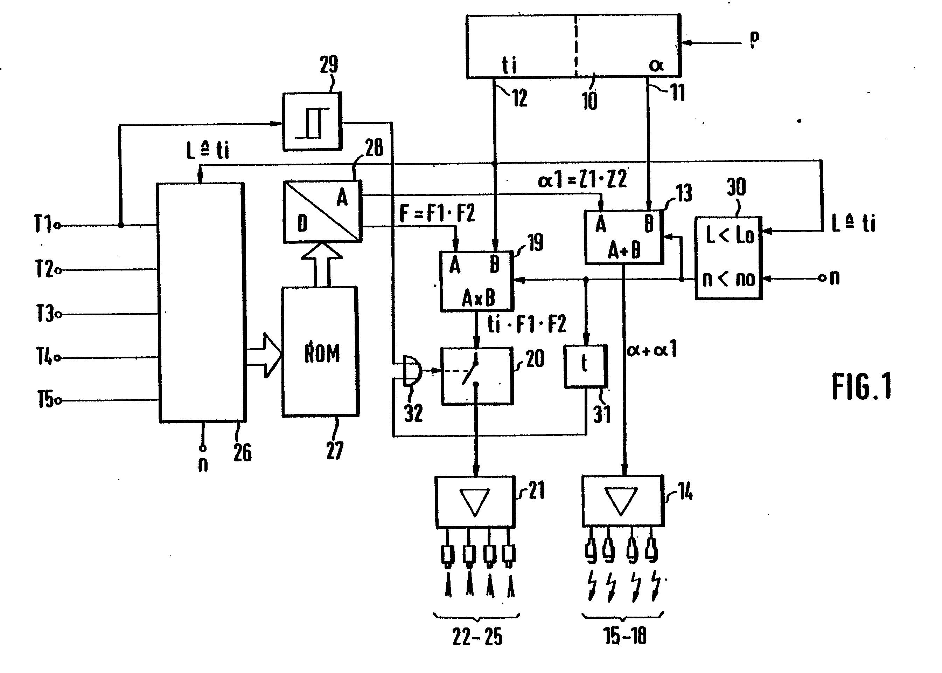

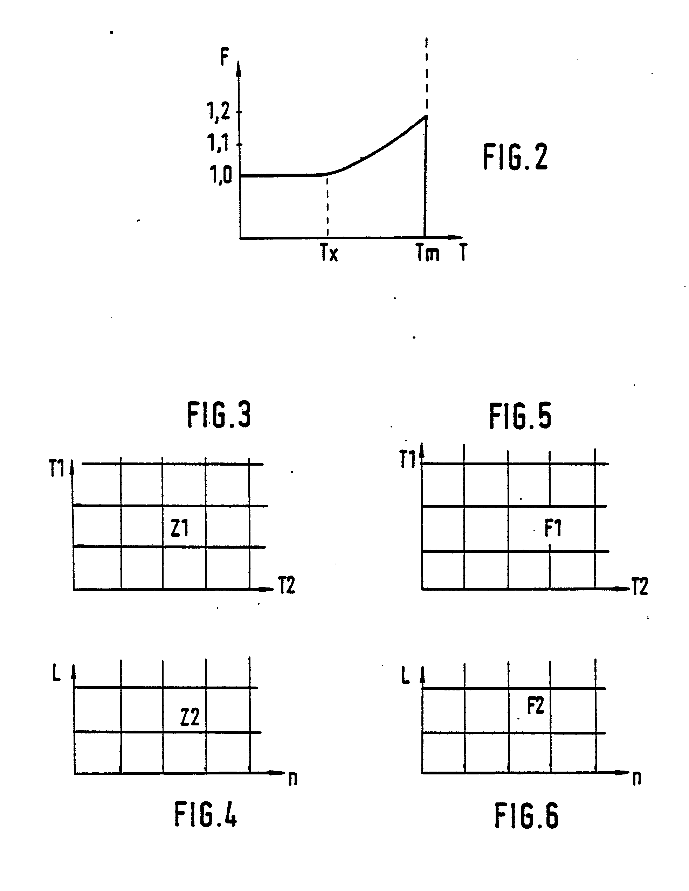

Die Wirkungsweise des in Fig. 1 dargestellten Ausführungsbeispiels soll in folgendem anhand der in den Fig. 2 bis 6 dargestellten Diagramme erläutert werden. Durch Anfettung des Verbrennungsgemischs im klopfgefährdetem Bereich (durch eine oder mehrere der Temperaturen T1 bis T5 definiert) wird die Verbrennungstemperatur gesenkt und die Klopfneigung somit verringert. Diese Anfettung ist bei Turbomotoren oft bis weit über das für maximale Leistung erforderliche Maß notwendig, jedoch nur dann, wenn durch längeren Stationärbetrieb hohe Motortemperaturen auftreten. Um sich diesen Verhältnissen optimal anzupassen, wird eine Anfettung über einen Faktor F gemäß einer empirisch oder theoretisch ermittelten Kennlinie gemäß Fig. 2 bewirkt. Diese Kennlinie ist im Festwertspeicher 27 abgelegt, wobei Fig. 2 den einfachsten Fall zeigt, nämlich die Anfettung als Funktion einer einzigen gemessenen Temperatur. Die Anfettung erfolgt dadurch, daß die in der Motorsteuerung 10 ermittelte Grundeinspritzzeit ti durch den multiplikativen Faktor F in der Multiplizierstufe 19 korrigiert wird. Die dadurch verlängerte effektive Einspritzzeit ergibt die gewünschte Anfettung. Diese Anfettungsfunktion wird im dargestellten Fall allerdings erst ab einer Temperatur Tx wirksam und außerdem nur in einem Bereich, der durch die Last L und die Drehzahl n vorgegeben ist. Nur im klopfgefährdeten Kennlinienbereich, d. h., bei einer Last größer als Lo und/oder einer Drehzahl größer als no soll diese Anfettung wirksam werden. Liegen die Werte für L und n darunter, so wird, wie bereits beschrieben, in der Multiplizierstufe 19 der Faktor F zu 1 gemacht.

Steigt die Motortemperatur trotz Anfettung über einen maximal zulässigen Grenzwert Tm an, so spricht die Schwellwertstufe 29 an, und die Einspritzung wird durch Öffnen der Schaltstufe 20 vollständig abgeschnitten. Dadurch fällt entweder das Lastsignal unter Lo ab oder die Drehzahl unter no. Nach Unterschreiten eines dieser Werte wird das Zeitglied 31 getriggert, so daß die Einspritzung nach Ablauf der Haltezeit t dieses Zeitglieds 31 durch Schließen der Schaltstufe 20 wieder von neuem einsetzt. Natürlich kann die Einspritzung auch über den Ausgang der Schwellwertstufe 29 wieder einsetzen, wenn durch Absinken der Motortemperatur des Ausgang der eine Hysterese aufweisenden Schwellwertstufe 29 wieder umschaltet. Zur Erhöhung des Fahrkomforts (Vermeidung eines Wiedereinschaltungsrucks) kann dabei in bekannter Weise gemäß der DE-A-2 834 638 der Zündzeitpunkt nach spät verschoben und allmählich auf seinen Sollwert nach früh wieder zurückgestellt werden.

Eine noch genauere Anpassung an die Klopfgrenze des Motors läßt sich durch zusätzliche Zündzeitpunktspätverstellung in Abhängigkeit einer oder mehrerer gemessener Temperaturen, d. h. des Temperaturwertes T erreichen. Gemäß einer vorgegebenen, im ROM 27 ebenfalls abgelegten Kennfeld wird dabei dem Zündwinkel $\alpha$ ein Zusatzwinkel $\alpha1$ im Addierer 13 zugegeben, so daß sich eine Spätverstellung um $\alpha1$ in Abhängigkeit des Temperaturwertes T ergibt. Auch hier wird wiederum durch die Schwellwertstufe 30 diese Spätverstellung unterhalb einer Lastgrenze Lo und unterhalb einer Drehzahlgrenze no unterdrückt.

Soll die temperaturabhängige Anfettung des Verbrennungsgemischs und die temperaturabhängige Zündzeitpunktspätverstellung in Abhängigkeit mehrerer Temperaturen und zusätzlicher Parameter erfolgen, so geschieht dies vorteilhaft durch eine Kennfeldsteuerung gemäß dem angegebenen Stand der Technik zur Motorsteuerung 10. Gemäß den in den Fig. 3 bis 6 dargestellten Diagrammen soll eine Kennfeldsteuerung z. B. in Abhängigkeit der Motortemperatur T1, oder Abgastemperatur T2, des Lastsignals L und der Drehzahl n erfolgen. Die beiden erstgenannten Parameter bilden bezüglich der Klopfgrenze zueinander eine Funktion, die im Falle der Zündung zu einem Korrekturzündwinkel Z1 und im Falle der Einspritzung zu einem ersten Korrekturfaktor F1 führt. Die beiden weiteren Parameter bilden zueinander eine weitere Funktion, die im Falle der Zündung zu einem Korrekturfaktor Z2 zum Korrekturzündwinkel Z1 führt und im Falle der Einspritzung zu einem weiteren Korrekturfaktor F2. Kombiniert man diese vier Parameter über die Funktionen, so führt dies zu Kennfeldern, die im ROM 27 abgespeichert sind. Einzelne Punkte dieses Kennfeld, im Falle der Zündung Z1 × Z2 und im Falle der Einspritzung F1 × F2 können jeweils durch eine bestimmte Kombination der vier Parameter angewählt werden. Als korrigierter Zündwinkel ergibt sich daraus $\alpha + \alpha 1$, wobei $\alpha 1 = Z1 \times Z2$ ist. Als korrigierte Einspritzzeit ergibt sich $ti \times F$, wobei $F = F1 \times F2$ ist.

Die genannten Funktionen und Kennfelder können anstelle der dargestellten Schaltungsanordnung natürlich auch als Zusatzprogramm in der Motorsteuerung 10 realisiert sein. Das Kennfeld für die temperaturabhängige Korrektur von Zündzeitpunkt (Spätverstellung) und Einspritzzeit (Anfettung) kann dabei dem Grundkennfeld der Motorsteuerung überlagert werden.

## Patentansprüche

1. Verfahren zur elektronischen Steuerung der Kraftstoffzumessung und des Zündzeitpunkts einer Brennkraftmaschine, insbesondere einer mit Aufladung betriebenen Brennkraftmaschine, mit einer Signalauswertung für Drehzahl-, Last- und Temperatursignale in Verbindung mit der Bereitstellung von Kraftstoffzumeß- und Zündsignalen und mit einer Gemischanfettung, die eine Verschiebung der Klopfgrenze hin zu früheren Zündwinkeln bewirkt, dadurch gekennzeichnet, daß im klopfgefährdeten Bereich oberhalb einer festgelegten Drehzahl (no) und/oder einer festgelegten Last (Lo) mit Überschreiten einer vorbekannten ersten Grenze (Tx) eines Temperaturwertes (T) der Brennkrafmaschine eine Gemischanfettung und eine Spätverstellung der Zündung vorgenommen wird ; daß der Verlauf der Gemischanfettung und der Spätverstellung der Zündung kennfeldabhängig ist ; und daß oberhalb einer vorbekannten höheren zweiten Grenze (Tm) des Temperaturwertes (T) die Kraftstoffzufuhr, insbesondere die Kraftstoffeinspritzung, unterbrochen wird.

2. Verfahren nach Anspruch 1, dadurch gekennzeichnet, daß der Temperaturwert (T) sich aus wenigstens einem der Temperaturwerte des Motors, des Abgases, der Ansaugluft, der Ladeluft oder der Turboladers ergibt.

3. Verfahren nach Anspruch 1, dadurch gekennzeichnet, daß die Gemischanfettung als multiplikative Größe und die Zündverstellung als additive Größe bereitgestellt wird.

4. Verfahren nach Anspruch 1, dadurch gekennzeichnet, daß die Kennfeldwerte bezüglich der Gemischanfettung und der Spätverstellung der Zündung abhängig sind von wenigstens einer der Größen Temperatur, Last oder Drehzahl.

## Claims

1. Process for the electronic control of the fuel metering and of the ignition point of an internal combustion engine, in particular of an internal combustion engine operated with a super charging, with a signal evaluation for speed, load and temperature signals in conjunction with the provision of fuel metering and ignition signals and with a mixture enrichment which effects a shift of the knock limit toward earlier firing angles, characterized in that, in the knock-endangered range above a fixed speed (no) and/or a fixed load (Lo), when a previously known first limit (Tx) of the temperature value (T) of the internal combustion engine is exceeded, a mixture enrichment and a delaying adjustment of the ignition is performed ; in that the progress of mixture enrichment and of delaying adjustment of the ignition is dependent on the performance characteristics ; and in that, above a previously known, higher second value (Tm) of the temperature value (T), the fuel supply, in particular the fuel injection, is interrupted.

2. Process according to Claim 1, characterised in that the temperature value (T) is obtained from at least one of the temperature values of the engine, of the exhaust, of the intake air, of the charge air or of the turbo charger.

3. Process according to Claim 1, characterised in that the mixture enrichment is provided as a multiplicative variable and the ignition adjustment is provided as an additive variable.

4. Process according to Claim 1, characterised in that the performance characteristic values with respect to the mixture enrichment and the delaying adjustment of the ignition are dependent on at least one of the variables temperature, load or speed.

## Revendications

1. Procédé de commande électronique du dosage du carburant et de l'instant d'allumage d'un moteur à combustion interne notamment d'un moteur à combustion interne avec turbocompresseur, comportant une exploitation des signaux de la vitesse de rotation de la charge et de la température en liaison avec la préparation des signaux de dosage de carburant et d'allumage et un enrichissement du mélange qui entraîne un décalage de la limite de cognement vers les angles d'allumage correspondant à l'avance d'allumage, caractérisé en ce que, dans la zone présentant un risque de cognement, au-dessus de la vitesse de rotation déterminée (no) et/ou une charge déterminée (Lo) avec dépassement d'une première limite (Tx) prédéterminée d'une valeur de température (T) du moteur à combustion interne, on effectue un enrichissement du mélange et un retard de l'allumage et en ce que la courbe de l'enrichissement du mélange et du décalage dans le sens du retard de l'allumage se fait en fonction du champ de caractéristiques et en ce qu'au-dessus d'une seconde limite (Tm), supérieure, prédéterminée de la valeur de température (T), on coupe l'alimentation en carburant notamment l'injection en carburant.

2. Procédé selon la revendication 1, caractérisé en ce que la valeur de la température (T) découle au moins d'une valeur de la température du moteur, des gaz d'échappement, de l'air aspiré, de l'air d'alimentation et du turbocompresseur.

3. Procédé selon la revendication 1, caractérisé en ce que l'enrichissement du mélange est une grandeur obtenue par multiplication et le décalage de l'allumage est une grandeur obtenue par addition.

4. Procédé selon la revendication 1, caractérisé en ce que les valeurs du champ de caractéristiques quant à l'enrichissement du mélange et au décalage en retard de l'allumage dépendent d'au moins l'une des grandeurs : température, charge, vitesse de rotation.

FIG.1

0 042 163

FIG.2

FIG.3

FIG.5

FIG.4

FIG.6